# EUROPEAN PATENT APPLICATION

(11) **EP 3 951 204 A1**
(43) Date of publication of application: **09.02.2022**
(21) Application number: 20784198.2
(22) Date of filing: 27.03.2020
(51) Int. Cl.: F16D 7/02, H02K 49/06, F16D 43/20, F16D 27/01

(54) **TORQUE LIMITER, DEVICE IN WHICH TORQUE LIMITER IS USED, AND METHOD FOR ADJUSTING TORQUE THEREOF**

(30) Priority: 02.04.2019 JP 2019070787
(71) Applicant: Yamauchi Corporation, Hirakata, Osaka 573-1132 (JP)
(72) Inventor: HIRAYAMA, Tadashi, Hirakata-shi, Osaka 573-1132 (JP)
(74) Representative: Müller Hoffmann & Partner
(86) International application number: PCT/JP2020/013939
(87) International publication number: WO 2020/203735

(57) **Abstract**

A torque limiter includes: a first rotating element (10); a second rotating element (20) that is coaxial with and rotatable relative to the first rotating element; a permanent magnet (12) located on either the first rotating element or the second rotating element; a hysteresis material (22) located on the other of the first rotating element and the second rotating element; and external magnetic field applying means (50) for applying an external magnetic field that affects hysteresis torque generated by the permanent magnet and the hysteresis material.

## Description

### Technical Field

The present invention relates to torque limiters, devices using the same, and methods for adjusting torque of the same.

### Background Art

Torque limiters are typically composed of a permanent magnet and a hysteresis material that face each other. Of such torque limiters, torque limiters capable of changing generated hysteresis torque are disclosed in, for example, Japanese Unexamined Patent Publication No. 2006-017141 (Patent Literature 1) and Japanese Unexamined Patent Publication No. H11-218154 (Patent Literature 2).

Patent Literature 1 discloses that the generated hysteresis torque is changed by changing the facing area between a magnet and a hysteresis material. Patent Literature 2 discloses that generated hysteresis torque is changed by changing electric power supplied to an electromagnet by electric power adjusting means.

### Citation List

### Patent Literatures

Patent Literature 1: Japanese Unexamined Patent Publication No. 2006-017141
Patent Literature 2: Japanese Unexamined Patent Publication No. H11-218154

### Summary of Invention

### Technical Problem

It is known in the art to make the generated torque variable as in the torque limiters of Patent Literatures 1 and 2. However, the structure itself of the torque limiter is complicated.

The present invention was made to solve the above problem, and it is an object of the present invention to provide a torque limiter capable of changing generated hysteresis torque, a device using the same, and a method for adjusting torque of the same.

### Solution to Problem

A torque limiter according to an aspect of the present invention includes: a first rotating element having a cylindrical outer peripheral portion; a second rotating element that has a cylindrical inner peripheral portion facing the cylindrical outer peripheral portion and that is coaxial with and rotatable relative to the first rotating element; a permanent magnet located on either the cylindrical outer peripheral portion of the first rotating element or the cylindrical inner peripheral portion of the second rotating element; a hysteresis material located on the other of the cylindrical outer peripheral portion of the first rotating element and the cylindrical inner peripheral portion of the second rotating element; and external magnetic field applying means for applying an external magnetic field that affects hysteresis torque generated by the permanent magnet and the hysteresis material.

A device using a torque limiter according to an aspect of the present invention is a device using a torque limiter attached to a rotatable rotating shaft. The torque limiter includes a first rotating element having a cylindrical outer peripheral portion, and a second rotating element that has a cylindrical inner peripheral portion facing the cylindrical outer peripheral portion and that is coaxial with and rotatable relative to the first rotating element. A permanent magnet is located on either the cylindrical outer peripheral portion of the first rotating element or the cylindrical inner peripheral portion of the second rotating element, and a hysteresis material is located on the other of the cylindrical outer peripheral portion of the first rotating element and the cylindrical inner peripheral portion of the second rotating element. External magnetic field applying means for applying an external magnetic field that affects hysteresis torque generated by the permanent magnet and the hysteresis material is located near the torque limiter.

Preferably, the external magnetic field applying means is provided in such a manner that a distance to the torque limiter is variable.

A method for adjusting torque of a torque limiter according to an aspect of the present inventio is a method for adjusting torque of a torque limiter including a permanent magnet and a hysteresis material that are arranged so as to face each other. The method includes adjusting magnitude of hysteresis torque generated by the permanent magnet and the hysteresis material by disposing external magnetic field applying means near the torque limiter, the external magnetic field applying means being means for applying an external magnetic field that affects the hysteresis torque.

Preferably, the external magnetic field applying means includes an element that applies the external magnetic field, and the magnitude of the hysteresis torque is adjusted by changing the number of the elements that apply the external magnetic field.

Preferably, the external magnetic field applying means includes an element that applies the external magnetic field, and the magnitude of the hysteresis torque is adjusted by changing a distance between the element that applies the external magnetic field and the torque limiter.

### Advantageous Effects of Invention

According to the torque limiter, the device using the same, and the method for adjusting torque of the same of the present invention, the generated hysteresis torque can be changed with a simple structure.

### Brief Description of Drawings

[FIG. 1] FIG. 1(a) shows a torque limiter removed from a device using the torque limiter according to an embodiment of the present invention, and FIG. 1(b) is a schematic diagram showing a schematic configuration of the device using the torque limiter.
[FIG. 2] FIG. 2 shows a schematic configuration of a torque limiter according to an embodiment of the present invention, where FIG. 2(a) is a sectional view and FIG. 2(b) is a perspective view.
[FIG. 3] FIG. 3 shows a method for adjusting torque of a torque limiter according to an embodiment of the present invention, where FIG. 3(a) is a side view and FIG. 3(b) is a front view.
[FIG. 4] FIG. 4 is a graph showing the relationship between the distance between an element that applies an external magnetic field and the outer periphery of the torque limiter and the generated hysteresis torque.
[FIG. 5] FIG. 5 shows an example of a device using a torque limiter, where FIG. 5(a) shows two or more sheets being guided, and FIG. 5(b) shows a friction roller and a paper feed roller rotating together.

### Description of Embodiments

An embodiment of the present invention will be described in detail with reference to the drawings. The same or corresponding parts in the drawings are denoted by the same reference signs, and description thereof will not be repeated.

### <Overview>

Typical torque limiters are used for, for example, paper feeders for copiers, printers, facsimiles, etc., banknote feeders for automated teller machines (ATMs) etc., color shift prevention tension mechanisms for transfer belts of multifunction color printers, reel table drives for audio equipment and video equipment, washing machines, etc.

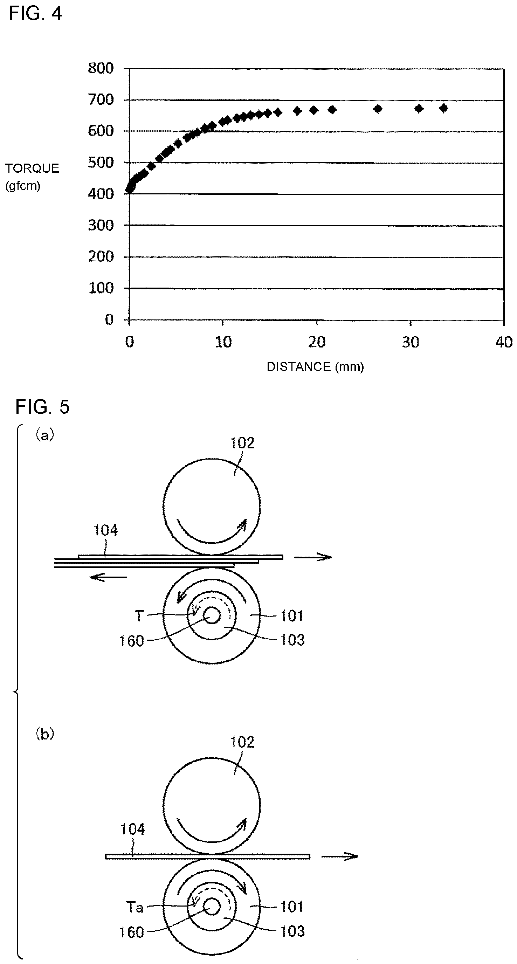

A paper feeder will be described as an example of a device using a torque limiter. FIG. 5 shows a double-feed prevention mechanism of a paper feeder that is used in printers etc. In FIG. 5, a friction roller 101 is pressed against a feed roller 102 with a predetermined pressure. Torque T is applied to the friction roller 101 in such a direction that a sheet 104 is returned via a torque limiter 103. The torque limiter 103 transmits rotation within a predetermined torque value Ta from the drive side, that is, a rotating shaft 160, to the driven side, that is, the friction roller 101. The torque limiter 103 has a function to cut off the transmission of rotation when torque greater than the predetermined torque value Ta is generated.

The predetermined torque value Ta is set to a value greater than the frictional force between the sheets and smaller than the rotational force of the feed roller 102. Accordingly, as shown in FIG. 5(a), when two or more sheets 104 are guided between the feed roller 102 and the friction roller 101, the second and subsequent sheets are separated from the first sheet and returned in the direction opposite to the feeding direction of the sheets 104.

However, when the feed roller 102 and the friction roller 101 are in direct contact with each other or in contact with each other with only one sheet 104 therebetween, rotation of the friction roller 101 is separated from rotation of the rotating shaft 106 by the function of the torque limiter 103. As a result, as shown in FIG. 5(b), the friction roller 101 rotates together with the feed roller 102. The sheets 104 are thus fed one by one from the paper feeder. In order to reliably feed the sheets 104 one by one from the paper feeder, a maximum value Ta of the transmission torque of the torque limiter 103 is required to be stable.

Required torque of the torque limiter varies depending on, for example, the type of device, where to use, function, etc. An example of a device in which the torque limiter is used as described above is a washing machine. When a washing machine performs "washing," large hysteresis torque is required because a motor needs to be rotated at low speeds. However, when the washing machine performs "drying," almost no hysteresis torque is required because the motor needs to be rotated at high speeds. Accordingly, a variable torque limiter capable of changing hysteresis torque to be generated is desired. Hereinafter, a device using such a variable torque limiter will be described.

### <Device Using Torque Limiter>

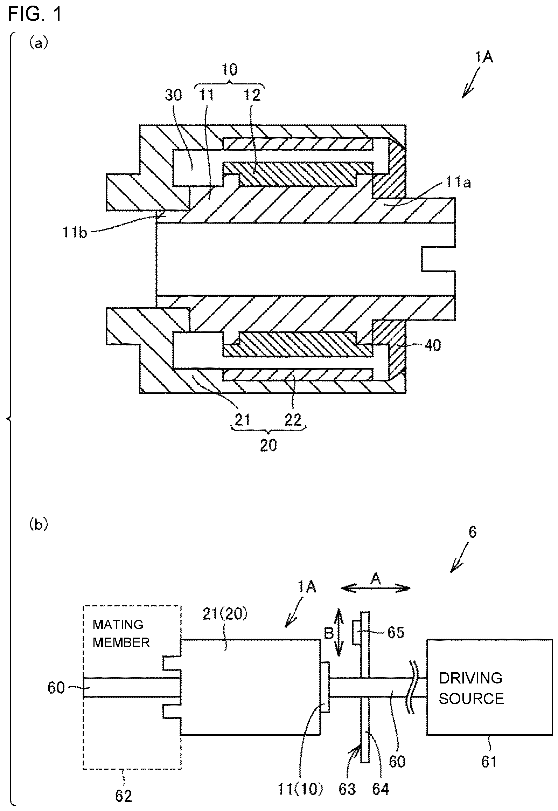

FIG. 1(a) shows a torque limiter 1A alone, and FIG. 1(b) is a schematic diagram showing a schematic configuration of a device 6 using the torque limiter 1A. Referring to FIG. 1(b), the device 6 using a torque limiter (hereinafter simply referred to as the "device 6") uses the torque limiter 1A attached to a rotatable rotating shaft 60.

As shown in FIG. 1(a) and FIG. 1(b), the torque limiter 1A is similar to a typical torque limiter. The torque limiter 1A includes: a first rotating element 10 that has a cylindrical outer peripheral portion and that rotates with the driving rotating shaft 60 via a set screw (not shown); and a second rotating element 20 that has a cylindrical inner peripheral portion facing the cylindrical outer peripheral portion and that is coaxial with and rotatable relative to the first rotating element 10.

The first rotating element 10 of the torque limiter 1A is attached to a driving source 61 via the rotating shaft 60. The second rotating element 20 of the torque limiter 1A is attached to a mating member 62. When the device 6 is a paper feeder, the driving source 61 is a motor, and the mating member 62 is a retard roller (friction roller) pressed against a feed roller (paper feed roller).

The first rotating element 10 includes a rotor shaft 11 and a cylindrical permanent magnet 12 located on the cylindrical outer peripheral portion of the rotor shaft 11. The rotor shaft 11 is made of, for example, a synthetic resin material. For the rotor shaft 11, at least a sliding portion 11b that slides with respect to the second rotating element 20 and a sliding portion 11a that slides with respect to a lid 40 that will be described later need only be made of a synthetic resin material, and portions other than the sliding portions 11a, 11b may be made of other material.

Materials that are of a grade with high sliding properties, high heat resistance, high dimensional stability, and a high limit PV value and that have high strength are suitable as the synthetic resin material. Specific examples of the synthetic resin material include polyacetal resin (POM), polybutylene terephthalate resin (PBT), polyamide resin (PA), polyolefin resin, polyimide resin (PI), polycarbonate resin (PC), polyether ether ketone (PEEK), polypropylene resin (PP), polyetherimide resin (PEI), liquid crystal polymer (LCP), polyethernitrile resin (PEN), polyetherketone (PEK), polyphenylene sulfide resin (PPS), polyphenylene oxide resin (PPO), phenolic resin (PF), epoxy resin (EP), and acrylonitrile-butadiene-styrene (ABS). These synthetic resin materials may contain a filler such as potassium titanate whiskers, polytetrafluoroethylene (PTFE), solid lubricant (graphite, molybdenum disulfide, etc.), oil, or glass beads in order to increase the sliding properties, rigidity, PV value, etc.

The permanent magnet 12 is insert-molded on the outer peripheral surface of the rotor shaft 11 and protrudes from the outer peripheral surface of the rotor shaft 11 toward the second rotating element 20. Examples of the permanent magnet 12 include a ferrite magnet and a rare earth magnet (including a sintered magnet and a resin magnet). It is desirable to use a rare earth magnet in order to reduce the size of the torque limiter and increase the hysteresis torque. Examples of the rare earth magnet include an Nd-Fe-B magnet, an Sm-Fe-N magnet, and an Sm-Co magnet.

The second rotating element 20 includes a housing 21 and a cylindrical hysteresis material (semi-hard magnet) 22 located on the cylindrical inner peripheral portion of the housing. The second rotating element 20 faces the first rotating element 10 with clearance 30 therebetween. The hysteresis material 22 is insert-molded on the inner peripheral surface of the housing 21 and protrudes from the inner peripheral surface of the housing 21 toward the rotor shaft 11. The axial length of the hysteresis material 22 is substantially equal to the axial length of the permanent magnet 12. Hysteresis torque is generated by rotating the permanent magnet 12 and the hysteresis material 22 facing each other. The magnitude of this hysteresis torque is substantially constant.

It is preferable that the hysteresis material 22 have, for example, a magnetic flux density of 0.7 T or more and a coercive force of 2.5 to 12.5 kA/m. Examples of the hysteresis material 22 include an Fe-Cr-Co alloy and an Fe-Co alloy. For example, the hysteresis material 22 is a seamless cylindrical member or a cylindrical member with a seam produced by curling a plate-like member.

The configuration in which the first rotating element 10 includes the permanent magnet 12 and the second rotating element 20 includes the hysteresis material 22 is described above as an example of the torque limiter. However, the first rotating element 10 may include the hysteresis material 22, and the second rotating element 20 may include the permanent magnet 12.

It is preferable that the lid 40 be provided on the other axial end of the rotor shaft 11 of the first rotating element 10 and the other axial end of the housing 21 of the second rotating element 20. The lid 40 and the housing 21 of the second rotating element 20 can be engaged with each other by known technical means such as screwing or fitting structure. As described above, the lid 40 is slidable with respect to the sliding portion 11a of the first rotating element 10.

As shown in FIG. 1(b), external magnetic field applying means 63 is disposed near the torque limiter 1A. The external magnetic field applying means 63 applies an external magnetic field that affects the hysteresis torque generated by the permanent magnet 12 and the hysteresis material 22 of the torque limiter 1A (hereinafter referred to as the "generated torque"). The external magnetic field applying means 63 is disposed between the torque limiter 1A and the driving source 61 and is attached to the rotating shaft 60.

The external magnetic field applying means 63 includes, for example, a rotating element 64 attached to the rotating shaft 60 and an element 65 that is attached to the rotating element 64 and that applies an external magnetic field (hereinafter simply referred to as the "element 65"). The element 65 is preferably a permanent magnet. The rotating element 64 has, for example, a disc shape and may rotate with the rotating shaft 60. As the external magnetic field applying means 63 is disposed near the torque limiter 1A, the element 65 can be disposed near the torque limiter 1A, so that the generated torque of the torque limiter 1A can be reduced. This permanent magnet is, for example, similar to the material of the permanent magnet 12 of the first rotating element 10. The term "near" means that the distance between the outer surface of the torque limiter 1A and the surface of the element 65 of the external magnetic field applying means 63 is 100 mm or less, preferably 40 mm or less, more preferably 20 mm or less, and includes the outer surface of the torque limiter 1A being in contact with the surface of the element 65 of the external magnetic field applying means 63.

The external magnetic field applying means 63 is provided in such a manner that the distance to the torque limiter 1A is variable. Specifically, the rotating element 64 is movable in the axial direction along the rotating shaft 60 as shown by arrow A. With this configuration, the generated torque can be reduced by moving the external magnetic field applying means 63 toward the torque limiter 1A, and the generated torque can be increased closer to the upper limit value of the generated torque of the torque limiter 1A by moving the external magnetic field applying means 63 away from the torque limiter 1A.

The element 65 of the external magnetic field applying means 63 may be movable in the direction shown by arrow B. With this configuration, the generated torque can be reduced by moving the element 65 of the external magnetic field applying means 63 radially inward toward the torque limiter 1A, and the generated torque can be increased closer to the upper limit value of the generated torque of the torque limiter 1A by moving the element 65 of the external magnetic field applying means 63 radially outward away from the torque limiter 1A.

As the element 65 of the external magnetic field applying means 63 is disposed near the torque limiter 1A as described above, the generated torque of the torque limiter 1A that is constant can be changed with a simple structure.

Although a permanent magnet is used as the element 65 of the external magnetic field applying means 63, the element 65 may be any element that applies an external magnetic field affecting the generated torque. For example, the element 65 may be an electromagnet, a magnetic material, etc. rather than a permanent magnet.

The rotating element 64 attached to the rotating shaft 60 and having the element 65 attached thereto is herein used as an example of the external magnetic field applying means 63. However, the external magnetic field applying means 63 is not limited to the above configuration as long as the external magnetic field applying means 63 is disposed near the torque limiter 1A. For example, the external magnetic field applying means 63 may be attached to a housing (not shown) of the device 6.

In the device 6 described above, the external magnetic field applying means 63 is provided separately from the torque limiter 1A. Hereinafter, a torque limiter with external magnetic field applying means will be described.

### <Torque Limiter>

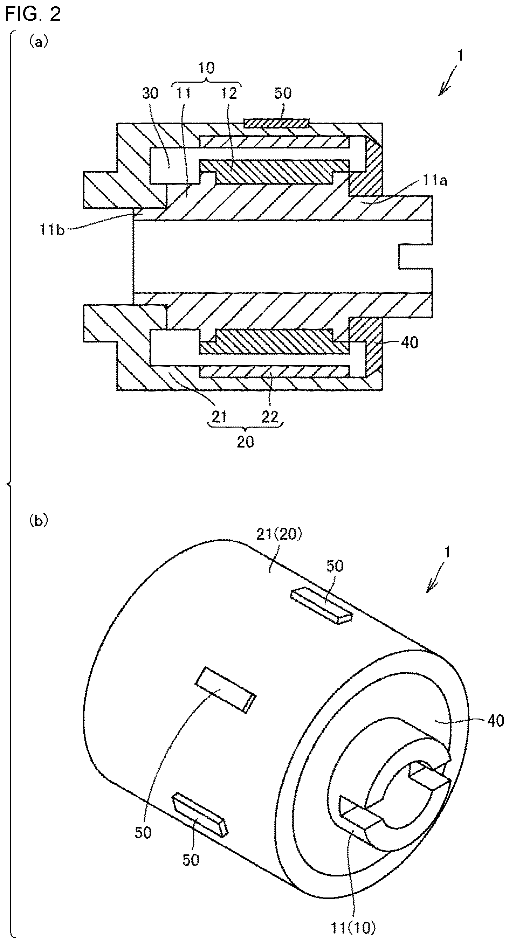

A torque limiter 1 will be described. FIG. 2(a) is a sectional view of the torque limiter, and FIG. 2(b) is a perspective view of the torque limiter. Referring to FIG. 2(a) and FIG. 2(b), the torque limiter 1 has substantially the same configuration as the torque limiter 1A described above, but is different from the torque limiter 1A in that the external magnetic field applying means is integral with the torque limiter.

Specifically, external magnetic field applying means 50 is provided on the outside of the second rotating element 20, that is, on the outer peripheral surface of the housing 21. More specifically, the housing 21 has recesses (not shown) in its outer peripheral surface, and the external magnetic field applying means 50 is embedded in the recesses. The external magnetic field applying means 50 affects the generated torque. Specifically, providing the external magnetic field applying means 50 can reduce the generated torque as compared to the case where no external magnetic field applying means 50 is provided.

Although the external magnetic field applying means 50 of the present embodiment is permanent magnets, the external magnetic field applying means 50 may be anything that generates an external magnetic field. For example, the external magnetic field applying means 50 may be electromagnets, magnetic materials, etc. rather than permanent magnets. A plurality of external magnetic field applying means 50 may be provided on the outer peripheral surface of the housing 21 as shown in FIG. 2(b), or only one may be provided. Providing a plurality of external magnetic field applying means 50 can further reduce the generated torque as compared to the case where only one external magnetic field applying means 50 is provided. The generated torque can thus be changed with a simple structure.

Although the external magnetic field applying means 50 is attached to the outer peripheral surface of the housing 21 of the second rotating element 20, the external magnetic field applying means 50 is not necessarily provided on the outer peripheral surface of the housing 21. For example, the external magnetic field applying means 50 may be provided on both axial ends of the torque limiter 1 or may be provided on the rotor shaft 11 of the first rotating element 10.

### <Method for Adjusting Torque of Torque Limiter>

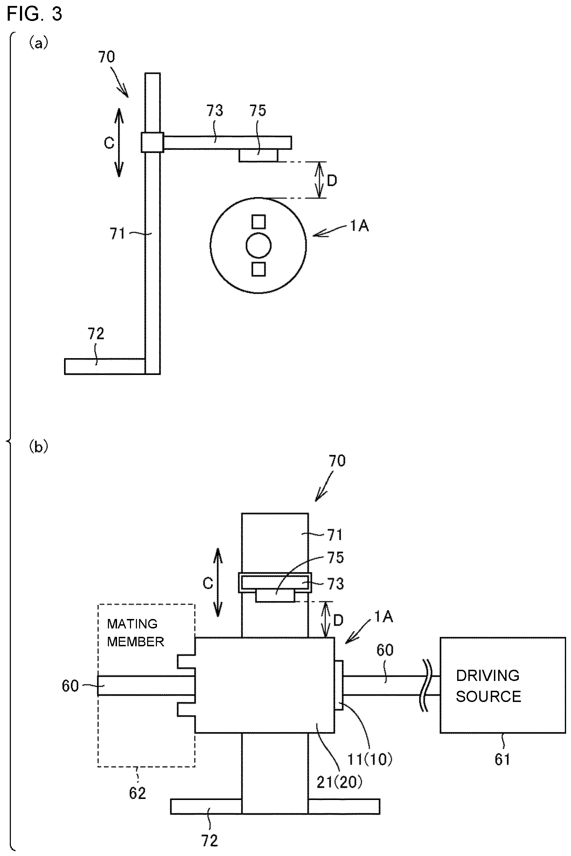

Next, a method for adjusting the torque of the torque limiter 1A will be described. FIG. 3(a) is a side view illustrating the method for adjusting the torque of the torque limiter 1A, and FIG. 3(b) is a front view of FIG. 3(a). External magnetic field applying means 70 is disposed near the torque limiter 1A in order to adjust the generated torque of the torque limiter 1A. The torque limiter used in the present embodiment may have substantially the same configuration as the torque limiter 1A described above.

The external magnetic field applying means 70 of the present embodiment is provided separately from the device 6 described above and is disposed near the torque limiter 1A. The magnitude of the generated torque of the torque limiter 1A can thus be adjusted.

As an example of such a configuration, as shown in FIG. 3(a) and FIG. 3(b), the external magnetic field applying means 70 is a support stand. Specifically, the external magnetic field applying means 70 includes a vertical member 71 extending vertically, a base 72 supporting the lower end of the vertical member 71, a horizontal member 73 that moves up and down along the vertical member 71, and an element 75 that is fixed to the horizontal member 73 and that applies an external magnetic field (hereinafter simply referred to as the element 75). The element 75 is preferably a permanent magnet. The element 75 is attached to the lower end of the horizontal member 73 so as to face the torque limiter 1A.

The horizontal member 73 is movable in the vertical direction along the vertical member 71 as shown by arrow C. The horizontal member 73 may be moved in the vertical direction either automatically or manually. The distance D between the upper end of the torque limiter 1A and the lower end of the element 75 of the external magnetic field applying means 70 (shortest distance between the torque limiter 1A and the element 75) is at most 100 mm or less, preferably 40 mm or less, more preferably 20 mm or less, and the horizontal member 73 need only be movable within the distance D. The distance D is minimum when the upper end of the torque limiter 1A and the lower end of the element 75 are in contact with each other.

With this configuration, as the horizontal member 73 is moved downward, the torque limiter 1A and the element 75 come closer to each other, and the generated torque of the torque limiter 1A can be reduced. As the horizontal member 73 is moved upward, the torque limiter 1A and the element 75 are moved away from each other, and the generated torque of the torque limiter 1A can be increased closer to the upper limit value of the generated torque of the torque limiter 1A.

FIG. 4 is a graph showing the relationship between the distance D between the upper end of the torque limiter 1A and the lower end of the element 75 of the external magnetic field applying means 70 and the generated torque. The inventor conducted experiments using the equipment shown in FIG. 3 in order to examine the relationship between the distance and the generated torque. For the experiments, the inventor prepared the torque limiter 1A including the first rotating element having a permanent magnet and the second rotating element having a hysteresis material. A sintered Nd-Fe-B magnet that is a permanent magnet was used as the element 75, and its surface magnetic flux density was 450 mT.

Referring to FIG. 4, when the distance is 0 mm, the lower end of the element 75 and the upper end of the torque limiter 1A are in contact with each other, and the generated torque is 414 gfcm. As the element 75 is gradually moved away from the torque limiter 1A, the generated torque increases gradually. When the distance between the element 75 and the torque limiter 1A is 10.48 mm, the generated torque is 635 gfcm. As the element 75 is further gradually moved away from the torque limiter 1A, the generated torque reaches 670 gfcm when the distance between the element 75 and the torque limiter 1A becomes 21.63 mm, and the generated torque substantially levels out thereafter. The generated torque was thus able to be changed as desired between 410 gfcm and 670 gfcm.

With this configuration, when the desired generated torque is 414 gfcm, the element 75 is brought into contact with the torque limiter 1A. When the desired generated torque is 675 gfcm, the distance between the element 75 and the torque limiter 1A is set to 33.55 mm. That is, the generated torque can be reduced by reducing the distance between the element 75 and the torque limiter 1A, and the generated torque can be increased by increasing the distance between the element 75 and the torque limiter 1A. Since it is only necessary to change the distance between the element 75 and the torque limiter 1A, the magnitude of the generated torque can be adjusted with a simple structure. With such a configuration, the magnitude of the generated torque can be adjusted by the user even after the torque limiter 1A is mounted.

In the above embodiment, the support stand 70 supporting the element 75 is used as the method for adjusting the torque of the torque limiter. However, the present invention is not limited to this configuration. For example, the user may move the element 75 toward the torque limiter 1A when it is desired to reduce the generated torque, and the user may move the element 75 away from the torque limiter 1A when it is desired to restore the generated torque to its original magnitude.

In the above embodiment, it is described that the distance between the element 75 and the torque limiter 1A is changed as a method for adjusting the torque of the torque limiter. Alternatively, the number of elements 75 may be changed. Specifically, the number of elements 75 may be increased when it is desired to reduce the generated torque, and the number of elements 75 may be reduced when it is desired to restore the generated torque to its original magnitude.

In the above embodiment, a permanent magnet is used as the element 75 that applies an external magnetic field. However, the element 75 may be anything that applies an external magnetic field. For example, the element 75 may be a magnet other than a permanent magnet, such as electromagnet, or a device that generates an external magnetic field.

Although the embodiments of the present invention are described above with reference to the drawings, the present invention is not limited to the illustrated embodiments. Various modifications and alterations can be made to the illustrated embodiments within the scope identical or equivalent to that of the present invention.

### Reference Signs List

1, 1A, 103: Torque Limiter, 6: Device Using Torque Limiter (Device), 10: First Rotating Element, 11: Rotor Shaft, 11a, 11b: Sliding Portion, 12, 75: Permanent Magnet, 20: Second Rotating Element, 21: Housing, 22: Hysteresis Material, 30: Clearance, 40: Lid, 50, 63, 70: External Magnetic Field Applying Means, 60: Rotating Shaft, 61: Driving Source, 62: Mating Member, 64: Rotating Element, 65, 75: Element That Apply External Magnetic Field (Element), 70: Support Stand, 71: Vertical Member, 72: Base, 73: Horizontal Member, 101: Friction Roller, 102: Feed Roller, 104: Sheet, and 160: Rotating Shaft.

## Claims

1. A torque limiter, comprising:
a first rotating element having a cylindrical outer peripheral portion;
a second rotating element that has a cylindrical inner peripheral portion facing the cylindrical outer peripheral portion and that is coaxial with and rotatable relative to the first rotating element;
a permanent magnet located on either the cylindrical outer peripheral portion of the first rotating element or the cylindrical inner peripheral portion of the second rotating element;
a hysteresis material located on the other of the cylindrical outer peripheral portion of the first rotating element and the cylindrical inner peripheral portion of the second rotating element; and
external magnetic field applying means for applying an external magnetic field that affects hysteresis torque generated by the permanent magnet and the hysteresis material.

2. A device using a torque limiter attached to a rotatable rotating shaft, wherein
the torque limiter includes
a first rotating element having a cylindrical outer peripheral portion, and
a second rotating element that has a cylindrical inner peripheral portion facing the cylindrical outer peripheral portion and that is coaxial with and rotatable relative to the first rotating element,
a permanent magnet is located on either the cylindrical outer peripheral portion of the first rotating element or the cylindrical inner peripheral portion of the second rotating element, and a hysteresis material is located on the other of the cylindrical outer peripheral portion of the first rotating element and the cylindrical inner peripheral portion of the second rotating element, and
external magnetic field applying means for applying an external magnetic field that affects hysteresis torque generated by the permanent magnet and the hysteresis material is located near the torque limiter.

3. The device using a torque limiter according to claim 2, wherein
the external magnetic field applying means is provided in such a manner that a distance to the torque limiter is variable.

4. A method for adjusting torque of a torque limiter including a permanent magnet and a hysteresis material that are arranged so as to face each other, comprising:
adjusting magnitude of hysteresis torque generated by the permanent magnet and the hysteresis material by disposing external magnetic field applying means near the torque limiter, the external magnetic field applying means being means for applying an external magnetic field that affects the hysteresis torque.

5. The method for adjusting torque of a torque limiter according to claim 4, wherein
the external magnetic field applying means includes an element that applies the external magnetic field, and
the magnitude of the hysteresis torque is adjusted by changing the number of the elements that apply the external magnetic field.

6. The method for adjusting torque of a torque limiter according to claim 4, wherein
the external magnetic field applying means includes an element that applies the external magnetic field, and
the magnitude of the hysteresis torque is adjusted by changing a distance between the element that applies the external magnetic field and the torque limiter.

## Amended claims

### Amended claims in accordance with Rule 137(2) EPC.

1. (Amended) A torque limiter, comprising:
a first rotating element having a cylindrical outer peripheral portion and including a rotor shaft;
a second rotating element that has a cylindrical inner peripheral portion facing the cylindrical outer peripheral portion and that includes a housing that is coaxial with and rotatable relative to the first rotating element;
a permanent magnet located on either the cylindrical outer peripheral portion of the first rotating element or the cylindrical inner peripheral portion of the second rotating element;
a hysteresis material located on the other of the cylindrical outer peripheral portion of the first rotating element and the cylindrical inner peripheral portion of the second rotating element; and
external magnetic field applying means for applying an external magnetic field that affects hysteresis torque generated by the permanent magnet and the hysteresis material, the external magnetic field applying means being located on the rotor shaft, an outer peripheral surface of the housing, or at least one of both axial ends of the torque limiter.

2. (Amended) A device using a torque limiter attached to a rotatable rotating shaft, wherein
the torque limiter includes
a first rotating element having a cylindrical outer peripheral portion, and
a second rotating element that has a cylindrical inner peripheral portion facing the cylindrical outer peripheral portion and that is coaxial with and rotatable relative to the first rotating element,
a permanent magnet is located on either the cylindrical outer peripheral portion of the first rotating element or the cylindrical inner peripheral portion of the second rotating element, and a hysteresis material is located on the other of the cylindrical outer peripheral portion of the first rotating element and the cylindrical inner peripheral portion of the second rotating element,
external magnetic field applying means for applying an external magnetic field that affects hysteresis torque generated by the permanent magnet and the hysteresis material is located near the torque limiter, and
the external magnetic field applying means is provided in such a manner that the number of elements that apply the external magnetic field is variable or is provided in such a manner that a distance to the torque limiter is variable.

3. (Deleted)

4. (Amended) A method for adjusting torque of a torque limiter including a permanent magnet and a hysteresis material that are arranged so as to face each other, comprising:
adjusting magnitude of hysteresis torque generated by the permanent magnet and the hysteresis material by disposing external magnetic field applying means near the torque limiter, the external magnetic field applying means being means for applying an external magnetic field that affects the hysteresis torque, wherein
the external magnetic field applying means includes an element that applies the external magnetic field, and
the magnitude of the hysteresis torque is adjusted by changing the number of the elements that apply the external magnetic field.

5. (Deleted)

6. (Amended) A method for adjusting torque of a torque limiter including a permanent magnet and a hysteresis material that are arranged so as to face each other, comprising:
adjusting magnitude of hysteresis torque generated by the permanent magnet and the hysteresis material by disposing external magnetic field applying means near the torque limiter, the external magnetic field applying means being means for applying an external magnetic field that affects the hysteresis torque, wherein
the external magnetic field applying means includes an element that applies the external magnetic field, and
the magnitude of the hysteresis torque is adjusted by changing a distance between the element that applies the external magnetic field and the torque limiter.

Statement under Art. 19.1 PCT

. Amended claim 1
   The phrase "and including a rotor shaft" is based on the matter described in paragraphs [0024] and [0039] of the specification as originally filed and FIGS. 1(a) and 2(a) as originally filed.
   The phrase "that includes a housing" is based on the matter described in paragraphs [0027], [0039], and [0040] of the specification as originally filed and FIGS. 1(a) and 2(a) as originally filed.
   The phrase "the external magnetic field applying means being located on the rotor shaft, an outer peripheral surface of the housing, or at least one of both axial ends of the torque limiter" is based on the matter described in paragraphs [0040] to [0042] of the specification as originally filed and FIGS. 2(a) and 2(b) as originally filed.
. Amended claim 2 Amended claim 2 corresponds to the combination of claims 2, 3, and 5 before amendment.
   . Claim 3 before amendment Claim 3 before amendment has been deleted.
. Amended claim 4 Amended claim 4 corresponds to the combination of claims 4 and 5 before amendment.
   . Claim 5 before amendment Claim 5 before amendment has been deleted.
. Amended claim 6 Amended claim 6 corresponds to the combination of claims 4 and 6 before amendment.
